# EUROPEAN PATENT APPLICATION

(11) **EP 3 409 147 A1**
(43) Date of publication of application: **05.12.2018**
(21) Application number: 18175035.7
(22) Date of filing: 30.05.2018
(51) Int. Cl.: A47J 31/06, A47J 31/36, A47J 31/60

(54) **INFUSION GROUP FOR MACHINES FOR THE PREPARATION OF BEVERAGES**

(30) Priority: 01.06.2017 IT 201700060299
(71) Applicant: BARDAZZI, Bruno, 50059 Vinci FI (IT)
(72) Inventor: BARDAZZI, Bruno, 50059 Vinci FI (IT)
(74) Representative: Leucci, Lidia

(57) **Abstract**

Infusion group for machines for the preparation of beverages using auto-protected prepackaged charges of edible materials, comprising an infusion chamber, designed to accommodate a prepackaged charge, and supply means of the pressurized water, the said infusion chamber being provided with pervious perforating means, in fluid communication with the dispensing means of the prepared beverage, characterized in that the pervious perforating means comprise a number of tubular needles projecting from a wall of the said infusion chamber toward the inside, each needle being provided with a radial opening communicating with a dispensing manifold, and in the said needles slide the respective pins having a section complementary to inner diameter of the said needles, the said pins being moveable from a position of complete obstruction of the flow from the said needles to the manifold, to a position of complete non-obstruction of the said flow.

## Description

The present invention relates to the machines for preparing beverages, and in particular it concerns the machines for preparing beverages which use prepackaged charges of edible material, which is dissolved or extracted by means of a stream of liquid injected into their container body. More particularly, the invention relates to an infusion group intended for this type of machine.

In the prior art beverage preparation machines, the term "infusion group" is used to designate the assembly which comprises a chamber intended to receive the prepacked charge, and which is provided with the means which allow the prepared beverage to be dispensed; this chamber is coupled to means for supplying hot water under pressure, which is then introduced into the prepackaged charge.

Over time, the prepackaged charges, which were initially permeable both to air and liquids, and the flow of liquid through them without the use of special precautions, have evolved towards so-called "self-protected" forms, i.e. forms in which the container body and the closing walls are made of a material impermeable to air, to allow a better preservation of edible material which, in the case of coffee powder, is particularly susceptible to contact with air, the said contact can lead to rancidity of fats contained in it and therefore to the worsening of the qualities of the infused drink.

Naturally, the prepacked charges thus obtained require means to perforate the walls both to supply hot water under pressure, and to cause the prepared beverage to escape from the prepackaged charge and to reach the dispensing means of the infusion group. From this point of view, there are two different approaches; in one case, pervious means are provided, i.e. provided with a conduit that communicates with delivery manifold of the infusion chamber, or impervious perforating means are provided, i.e. only able to drill the hole, or other type of opening, but that do not convey the drink to the dispensing means; in this case the fluid is directly collected in a delivery manifold, and then dispensed towards the collection container prepared by the user.

Considering the pervious perforation means, their effectiveness, in order to obtain a quality extraction and guarantee the correct operation of the machine, must be evaluated in relation to the extraction time of the edible material on one side, and therefore to the increase in pressure inside the prepackaged charge, which, above all in the coffee sector, guarantees a final high quality product (the so-called "coffee cream"). On the other hand, a device must be provided which is not intended to be permanently clogged with the extraction residues, which contain fine particles and oils, naturally tending to adhere to the walls of the duct inside the perforation means.

In practice, if a single pervious perforation means having large enough size is of relatively simple maintenance, on the other hand this same device will offer uninspiring results from the point of view of the infusion; on the contrary, with a large number of very small pervious perforation means, the extraction will be very effective, but the maintenance of the machine will be really extremely problematic.

Therefore, an aim of the present invention is an infusion group for machines for preparing beverages that use self-protected prepackaged charges of edible material, in which there are provided perforating means for providing the best compromise from the dimensional point of view, and on the other hand they are free from problems of clogging caused by deposits of suspended materials in the beverage produced.

An object of the present invention is therefore an infusion group for machines for preparing beverages that use self-protected prepackaged charges of edible material, comprising an infusion chamber, intended to house a prepackaged charge, and supply means of hot water under pressure, said infusion chamber being provided with pervious perforating means, in fluid communication with the dispensing means of the prepared beverage; said pervious perforating means comprise a plurality of tubular needles projecting inward from a wall of said infusion chamber, provided with radial apertures respectively communicating with a delivery manifold, and in which slide respective pins of section complementary to the internal diameter of said needles, said pins being movable within said needles by a position of complete obstruction of the flow from said needles to said manifold to a position of complete non-obstruction of said flow.

In a preferred embodiment, said needles have an inner section of the respective duct of at least 50% of the outer section of said needles; said pins preferably have a section at least equal to 80% of the internal section of said needles. In particular, said needles preferably have a section of less than 6% of the average section of the prepackaged charge of edible powder; the section of said needles is however not less than 3% of the average section of the prepackaged charge.

In another preferred embodiment, said delivery manifold comprises a sealing member made of an elastically deformable material, and preferably made of elastomeric material, positioned on the wall of said infusion chamber on which the tubular needles are arranged, provided with a collection conduit communicating with the radial apertures of the aforementioned needles, and adapted for suitably surrounding each of the same needles.

In a further embodiment, said infusion chamber is suitable for housing a prepacked charge provided with a container body having a substantially cylindrical or frustoconical shape; said pervious perforating means can be arranged in said infusion chamber in such a way as to perforate the bottom wall of said container body. Alternatively, said perforating means may be similarly arranged in such a way as to perforate the side wall of said container body.

In a variant embodiment of the infusion group according to the present invention, the supply means of hot water under pressure are arranged in such a way as to cooperate with the closing wall of the container body of a prepackaged charge; alternatively, said water supply means can cooperate with the side wall of said container body.

Further advantages and characteristics of the infusion group according to the present invention will be apparent from the following description of some embodiments thereof, given by way of non-limiting example with reference to the attached drawings, in which:
Figure 1 shows a longitudinal section view of the schematic diagram of a first embodiment of the infusion group according to the present invention, prior to the coupling;
Figure 2 illustrates the infusion assembly of Figure 1, during the coupling;
Figure 3 shows a longitudinal section view of a second embodiment of the infusion group according to the present invention, prior to the coupling;
Figure 4 illustrates the infusion assembly of Figure 4, during the coupling.

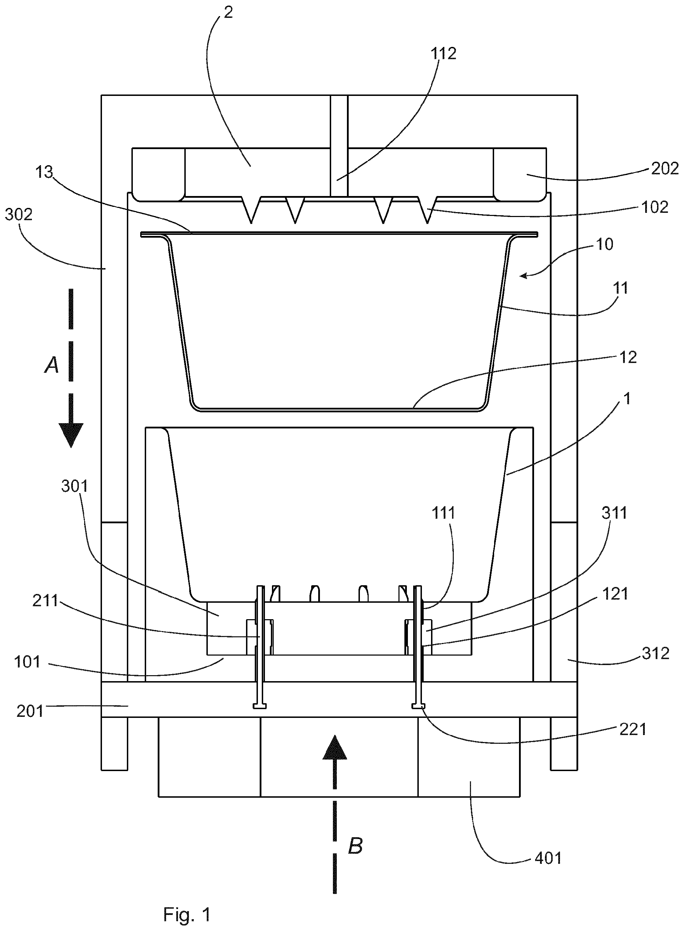

Figure 1 schematically shows a longitudinal section of a first embodiment of the infusion group for machines for preparing beverages that use self-protected prepackaged charges of edible material according to the present invention, shown before its coupling; with 1 the infusion chamber is designated. Said infusion chamber 1 provides a bottom wall 101 from which a plurality of tubular needles 111 projects, provided with a radial opening 121.

Said opening 121 faces the delivery manifold 311 formed in the sealing member 301, which is positioned on the bottom wall 101, and which surrounds each of the said needles 111. Inside the needles are arranged sliding the pins 211, whose heads 221 are incorporated in the crosspiece 201, the ends of which are inserted in the slot 312 of the support frame 302. The infusion chamber 1 is integral with a support base 401 movable in the direction indicated by the arrow B for the coupling of the infusion group .

The prepacked charge 10 intended to be inserted into the infusion chamber is of the simplest type which can now be realized, i.e. comprising a continuous side wall 11 made of a piece with a bottom wall 12, preferably made of thermoformed material impermeable to air, and closed at the opposite end by a closing wall, preferably made of multilayer of plastic material and aluminum, and therefore also impermeable to air.

The infusion group further comprises the head 2 for dispensing hot water under pressure, comprising in turn the delivery duct 112, the drilling means 102 and the annular sealing gasket 202. The infusion head 2 is mounted on the support frame 302 already mentioned previously, in which the slot 312 is formed cooperating with the crosspiece 201. The support frame 302 is movable along the direction of the arrow A for coupling the infusion group.

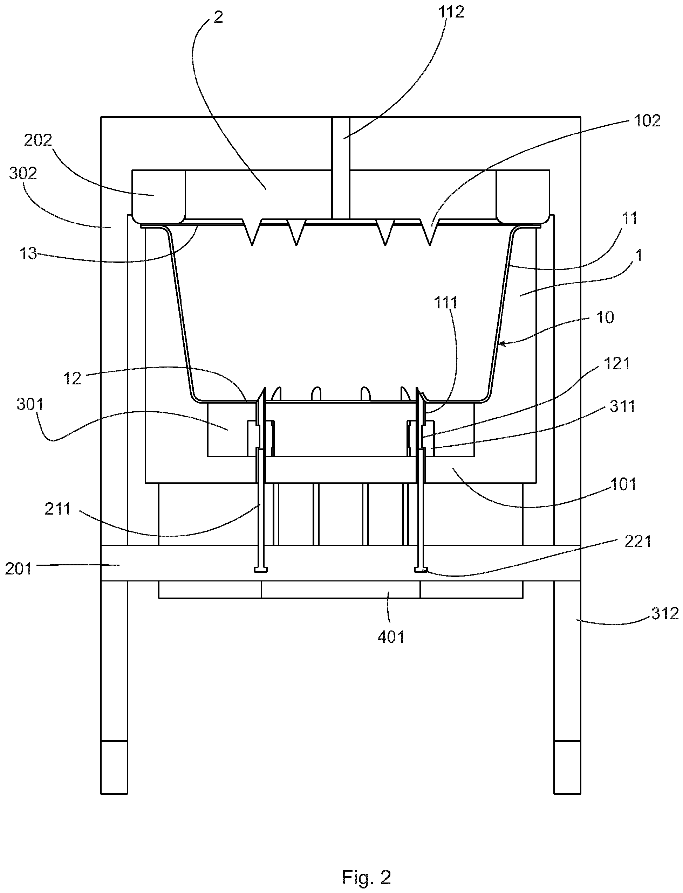

The operation of the device described above will be apparent from the following, with reference to Figure 2, in which equal parts correspond to the same numerals. As can be seen, the tubular needles 111 projecting from the bottom wall 101 of the infusion chamber 1 appear in Figure 1 completely occupied by the pins 211; when the frame 302 and the support base 401 move towards each other, the tips of the needles 111 pierce the bottom wall 12 of the prepackaged charge 10, while at the same time, as can be seen in figure 2, the pins 211 are at least partially extracted, so as to completely expose the span of radially formed openings 121 in the tubular needles 111, and thus allow that the flow of hot water under pressure from the conduit 112 of the supply head 2, after having extracted the material contained in the prepackaged charge, it can reach the delivery manifold 311 and from it the dispensing means, not shown in the figure. The gasket member 301 made of an elastomeric material in which the delivery manifold 311 is obtained guarantees the optimal control of the seal around the tubular needles.

The pins 211, upon the subsequent reopening of the infusion group, will return to completely occupy the span of said tubular needles 111, and in this way will be able to remove any deposit or residue that may have formed during the dispensing phase of the beverage.

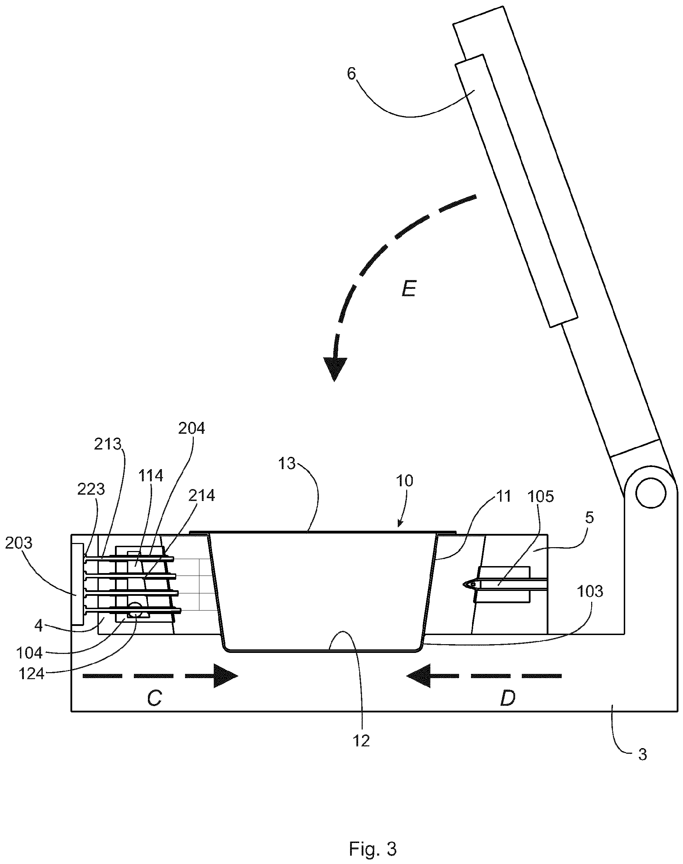

Figure 3 illustrates a second embodiment of the infusion group according to the present invention; with reference 3 a support base is designated in which a housing cavity 103 is formed in which is inserted the bottom wall 12 of a prepackaged charge 10 similar to that described previously. The movable side wall portion 4 is located on the support base 3, on which are placed tubular needles 204 provided with radial openings 214 which open on a delivery manifold 114, formed in a sealing member 104, and communicating with the dispensing duct 124. Inside the needles 204 the pins 213 are inserted sliding, integral with their heads 223 to the bar 203, in turn coupled to the support base 3. The infusion group further comprises the portion 5 of the movable side wall in which they are positioned the supply means 105 of the hot water under pressure. At the base 3 the cover 6 is hinged, which moves along the arrow E for the coupling of the infusion group, while the side wall portions 4 and 5 move respectively along the directions indicated by the arrow C and the arrow D.

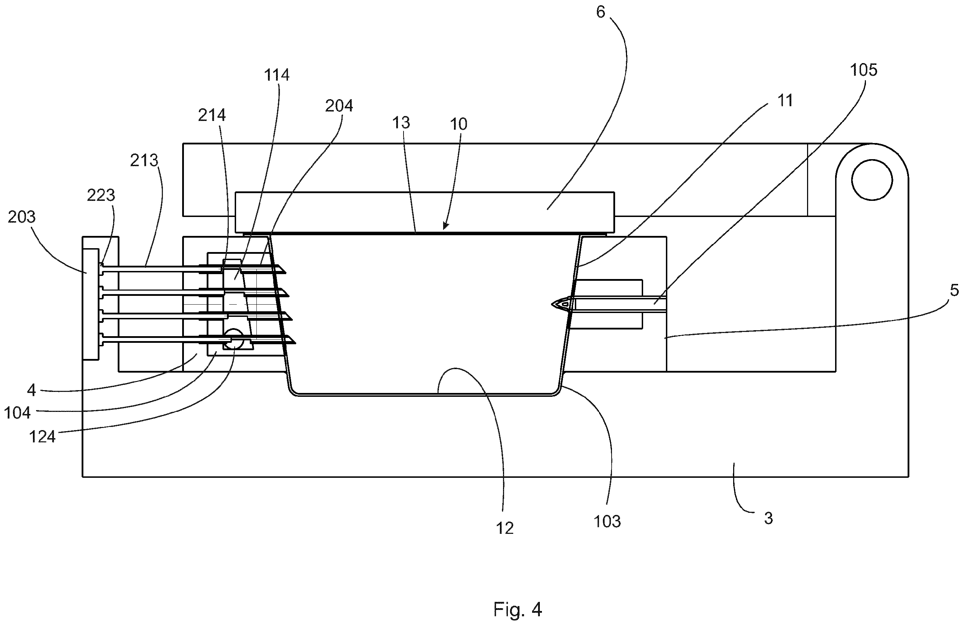

The operation of the infusion group described above will be evident from the following, also with reference to Figure 4, in which the equal parts correspond to the same numerals. As shown in Figure 3, the tubular needles 204 projecting from the movable side wall portion 4 are completely occupied by the pins 213. When the lid 6 is lowered and the two side wall portions 4 and 5 move towards each other, the distal ends of the needles 204 perforate the side wall 11 of the prepackaged charge 10; at the same time, the pins 213 are partially extracted from the needles 204, leaving the span of the radial apertures 214 formed in said needles completely free, thus allowing the beverage formed inside the prepackaged charge 10 by the action of the hot water under pressure supplied by the means 105, to access the manifold 114 of the sealing member 104, and from this to the dispensing duct 124.

Also in this case, following the reopening of the infusion chamber, the pins 213 will slide back into the needles 204, removing any possible deposit or concretion formed during the dispensing of the beverage produced.

The infusion group of the present invention, as it appears evident from the two embodiments described and illustrated here, allows to have a much more free approach to the structure of the container body of the prepackaged charge, which can be as simple as possible, given that the device adopted to transfer the beverage from inside to outside the container body allows a high control of the dispensing. Precisely for this reason it no longer seems necessary to reason according to the typical logic of the state of the art, in which a container body of a prepackaged charge is passed through by the flow of supply and dispensing along its axis of vertical symmetry. With the perforating means used in the infusion group according to the present invention this assumption is no longer necessary, and variants may also be provided in which feed means which act on the closing wall of the prepackaged charge are combined with perforating means acting on the side wall, as well as can be provided feeding means which act on the side wall combined with perforating means which act on the bottom wall of the container body of the prepackaged charge.

The infusion group according to the present invention therefore guarantees a high degree of control of the dispensing of the beverage prepared with self-protected prepackaged charges of edible product, without being subject to particular problems of clogging due to the accumulation of deposits in the perforating means used therein.

## Claims

1. Infusion group for machines for the preparation of beverages using auto-protected prepackaged charges of edible materials, comprising an infusion chamber, designed to accommodate a prepackaged charge, and supply means of the pressurized water, the said infusion chamber being provided with pervious perforating means, in fluid communication with the dispensing means of the prepared beverage, **characterized in that** the pervious perforating means comprise a number of tubular needles projecting from a wall of the said infusion chamber toward the inside, each needle being provided with a radial opening communicating with a dispensing manifold, and in the said needles slide the respective pins having a section complementary to inner diameter of the said needles, the said pins being moveable from a position of complete obstruction of the flow from the said needles to the manifold, to a position of complete non-obstruction of the said flow.

2. Infusion group according to the claim 1, in which the said needles have an inner section of the respective conduit at least equal to the 50% of the outer section of he said needles.

3. Infusion group according to the claim 1 or 2, in which the said pins have a section at least equal to the 80% of the inner section of the said needles.

4. Infusion group according to anyone of the preceding claims 1 to 3, in which the said needles have a section in a range comprised between the 3% and 6% of the mean section of the prepackaged charge of edible material.

5. Infusion group according to anyone of the preceding claims 1 to 4, in which the said dispensing manifold comprise a sealing assembly in elastically deformable material, and preferably in elastomeric material, positioned on the wall of the said chamber on which are positioned the said tubular needles, provided with a collecting conduit communicating with the radial openings of the said needles, and adapted to surround suitably each of the said needles.

6. Infusion group according to anyone of the preceding claims, in which the said infusion chamber is adapted to accommodate a prepackaged charge provided with a container body having a substantially cylindrical or frustoconical shape, provided with a side wall, a bottom wall integral to the said side wall and a closing wall.

7. Infusion group according to the claim 6, in which the said pervious perforating means are arranged in the said infusion chamber so as to perforate the bottom wall of the said container body.

8. Infusion group according to the claim 6, in which the said perforating means are arranged in the said infusion chamber so as to perforate the side wall of the said container body.

9. Infusion group according to the claim 7 or 8, in which the supply means of the pressurized water are positioned so as to cooperate with the closing wall of the said container body.

10. Infusion group according to the claim 7 or 8, in which the supply means of the pressurized water are positioned so as to cooperate with the side wall of the said container body.
